# EUROPEAN PATENT SPECIFICATION

(11) **EP 3 122 196 B1**
(45) Date of publication and mention of the grant of the patent: **19.08.2020**
(21) Application number: 15769439.9
(22) Date of filing: 25.03.2015
(51) Int. Cl.: A41B 13/10, A47G 11/00, A61G 1/01, A61G 7/10, A61G 7/05, A41D 13/12, C09J 7/22, C09J 7/30

(54) **DISPOSABLE CLOTH**
EINWEGTUCH
TISSU JETABLE

(30) Priority: 26.03.2014 FI 20145280
(43) Date of publication of application: 01.02.2017
(73) Proprietor: Carecare Oy, 80400 Ylämylly (FI)
(72) Inventor: MUONA, Anneli, FI-80400 Ylämylly (FI); LAMPIO, Aino, FI-80400 Ylämylly (FI); KOIVUROVA, Heikki, FI-80400 Ylämylly (FI)
(74) Representative: Kolster Oy Ab
(86) International application number: PCT/FI2015/050203
(87) International publication number: WO 2015/144988

(56) References cited:
- WO-A1-95/19113
- DE-U1-202012 005 173
- DE-U1-202012 005 173
- GB-A- 422 140
- GB-A- 422 140
- US-A- 4 306 316
- US-A- 5 787 523
- US-A- 5 787 523
- US-A1- 2005 102 750
- US-B1- 6 493 879

## Description

### Background of the invention

The invention relates to a disposable cloth.

Particularly in a hospital environment, a disposable cloth has a multitude of uses. The uses may be associated with protecting the garments of nurses or patients, for instance. Further, the uses may relate to moving or supporting a patient. Document GB 422 140 A discloses a waterproof bed sheeting comprising a fabric base, for example woven cotton material, coated on one side with a thin layer of rubber or other waterproofing material providing a relatively smooth surface and on the other side with a thin flexible layer of sponge or crepe rubber.

### Brief description of the invention

An object of the present invention is to provide a novel, disposable cloth suitable for use in association with a patient.

The cloth according to the invention is characterized by what is disclosed in the independent claim.

Some embodiments of the invention are disclosed in the dependent claims.

According to an embodiment, the cloth is disposable and comprises a base layer, and a friction coating is arranged over a part of at least one surface of the base layer. The cloth is simple and hygienic and suitable for use in association with a patient. The cloth facilitates nursing work, for instance, and prevents bacteria from spreading. The disposability efficiently prevents bacteria from spreading. If the friction coefficient of the surface on both sides of the cloth against a countersurface is, over at least a part of the surface, higher than 0.6, such a cloth may be used for instance for supporting a patient into a desired position. Further, such a cloth may also be used for increasing friction between a nurse and a patient, i.e. when the nurse is moving the patient, it is possible to distribute the strain caused by the lifting and moving in a more advantageous manner over the entire body of the nurse and to avoid and reduce the risk of the nurse slipping the grip of the patient while lifting and/or moving him or her. Further, such a cloth may be used on the floor, placed underneath the soles of the patient's feet to prevent the feet from sliding when the patient rises up or the patient is assisted in getting out of the bed. Further, such a cloth may be used in bed in connection with a horizontal transfer or moving, underneath the soles of the patient's feet to prevent the feet from sliding against the sheet when the patient pushes him- or herself using his or her feet.

According to an embodiment, the base layer is made of a smooth and slippery material while the friction coating is adhesive glue. When the friction coating is adhesive glue, it is possible to attach the cloth temporarily for instance to the patient's or nurse's garments to protect the garments. After use, the cloth provided with adhesive glue is easy to detach from the garments. The cloth reduces the risk of contamination and is economical in use since it substantially reduces the need to wash work clothes. The disposability efficiently prevents bacteria from migrating from one room to another, carried by work clothes. The adhesiveness enables protection to be implemented exactly as required by a given task or another procedure.

According to an embodiment, the friction coating is adhesive glue, and the adhesive glue is arranged in the base layer such that when a first surface of the base layer is provided with a friction coating, no friction coating is provided at the same point on a second surface of the base layer and, on the other hand, if in such a case, however, a friction coating is provided somewhere on the second surface of the base layer, no friction coating is provided expressly at the particular point on the first surface of the base layer. This enables the cloth to be made into a sandwich structure, such as for instance a stack of sheets, or a roll such that the friction coatings do not come face-to-face with one another in the sandwich structure. This enables the cloth to be made into a sandwich structure with no release paper or the like between the layers, and yet the different layers do not substantially adhere to one another.

According to an embodiment, the base layer of the cloth is made of a nonwoven fabric, and the cloth contains a binding polymer fibre which forms a friction coating on both sides of the cloth. In such a case, the polymer fibre is for instance a rubbery polymer, which has a fairly high friction coefficient. Such a cloth is arranged to be permeable to air, enabling it to be used for supporting a patient even over a long period of time, for instance.

According to yet another embodiment, the cloth is made permeable to air for instance by perforation when its both sides are provided with a friction coating. Being permeable to air, the cloth may thus be used for supporting a patient even over a long period of time.

According to an embodiment, only one surface of the cloth is provided with a friction coating, and the base layer of the cloth is slippery. Such a cloth may be used, for instance, for moving a patient on an underlying surface horizontally. The cloth may be placed between the patient and the underlying surface so as to reduce friction between the patient and the underlying surface in a controlled manner. Consequently, it takes less power to move the patient horizontally on the underlying surface, which substantially reduces the risk of occupational injury. The cloth may also be used in a vertical transfer, for instance for readjusting a vertical position of the patient. For example, the patient's position can be conveniently readjusted vertically when moving the patient from a lying-down position into a sitting position while at the same time lifting an end of the patient's bed. Further, point loads applied to the patient are also reduced, which thus enhances patient safety and patient comfortableness as well.

According to an embodiment, a part of at least one surface of the cloth is provided with adhesive glue, and somewhere else than where the adhesive glue is provided are arranged shapes or structures to keep the entity formed by the cloths lying on top of one another uniform in thickness. The height of said shape or structure may equal or exceed the height of the adhesive glue. In such a case, it is possible to prevent the cloths lying on top of one another from adhering to one another, or at least reduce such adherence.

### Brief description of the figures

The invention is described in closer detail with reference to the accompanying drawings, in which:
Figure 1 shows a cloth rolled up into a roll,
Figure 2 shows how the cloth is used for moving a patient horizontally,
Figure 3 shows how the cloth is used for protecting a nurse's garments,
Figure 4 shows how the cloth is used for protecting the patient's garments,
Figure 5a shows another cloth rolled up into a roll,
Figure 5b is an enlarged view of a part of a cross-section of the roll of Figure 5a,
Figure 6a shows a third cloth rolled up into a roll,
Figure 6b is an enlarged view of a part of a cross-section of the roll of Figure 6a,
Figure 7a shows a fourth cloth rolled up into a roll,
Figure 7b is an enlarged view of a part of a cross-section of the roll of Figure 7a,
Figure 8 shows how the cloth is used for supporting a patient,
Figure 9 shows how the cloth is used for lifting and moving a patient,
Figure 10 shows how the cloth is used when a patient moves on a bed,
Figure 11 shows how the cloth is used when a patient gets up from the bed,
Figure 12a is a cross-sectional end view showing a fifth cloth,
Figure 12b shows the cloths according to Figure 12a placed on top of one another,
Figure 13a is a cross-sectional end view showing a sixth cloth,
Figure 13b shows the cloths according to Figure 13a placed on top of one another,
Figure 14a is a cross-sectional end view showing a seventh cloth,
Figure 14b shows the cloths according to Figure 14a placed on top of one another,
Figure 15a is a cross-sectional end view showing an eighth cloth, and
Figure 15b shows the cloths according to Figure 15a placed on top of one another.

### Detailed description of the invention

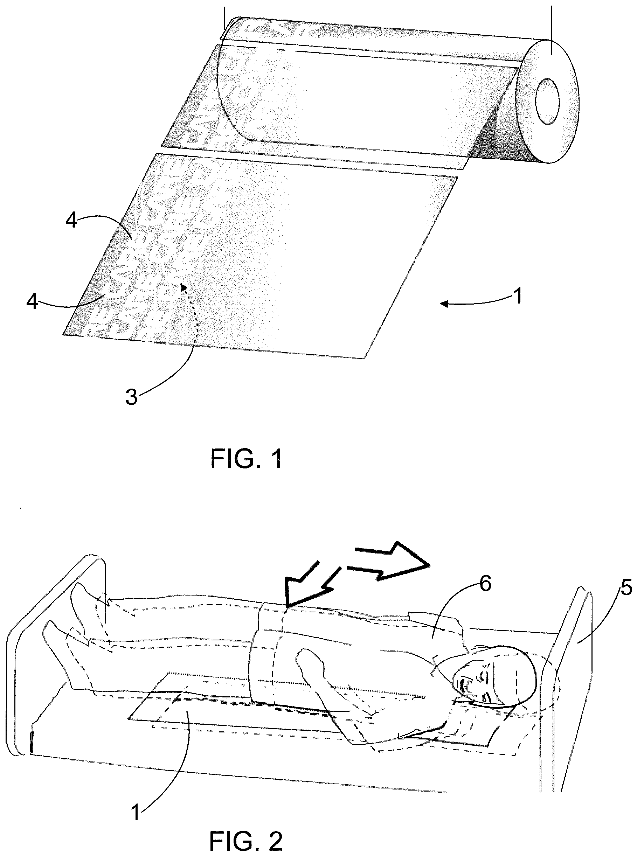

Figure 1 shows a cloth 1. The cloth 1 is made into a long line, which has been rolled up into a roll. A desired length of the cloth 1 may be unwound from the roll, and it may be divided into sheets of desired measure. The width of the roll may be for instance 20 to 70 cm, preferably 30 to 50 cm.

The cloth may be cut into sheets for instance such that the line of cloth is provided with perforations to enable, by tearing at them, the cloth to be cut into sheets of predetermined measure. On the other hand, the cloth, when rolled up, may be continuous, in which case the cloth may be cut into sheets of desired measure by using a knife or scissors, for instance. Further, the roll may be arranged in a holder or a package provided with a cutting member, such as a sharp edge or a knife or the like. The holder or package enables the roll to be arranged in an end of a patient's bed, wherefrom the cloth is readily available for use.

The cloth 1 comprises a base layer 2. The base layer 2 may be formed from a smooth and slippery material, such as plastic, preferably polyolefin, whose friction coefficient for instance against a bed-sheet or a garment is low. The friction coefficient may be for instance less than 0.4 or less than 0.2, or even considerably lower than this.

Preferably, the material of the base layer is a material exploitable as energy through combustion. In such a case, the cloth 1 can be easily and advantageously utilized and simultaneously disinfected after use. Examples of such materials include polyethylene PE, polypropylene PP, polyamide PA, ethylene-vinyl acetate EVA, polyethylene terephthalate PET, polylactide PLA, and polyglycolic acid PGA.

Preferably, the cloth 1 is single-layer, i.e. the base layer 2 is the only layer of the cloth 1 and the base layer 2 is single-layer. A friction coating 3 does not form a layer since it is only provided over a part of the surface. This makes the cloth 1 easy and inexpensive to manufacture. When desired, the cloth 1 may also be double-layered or more-than-double-layered. In such a case, in addition to the base layer 2, the cloth 1 may also have other layers and/or the base layer 2 may be double-layered or more-than-double-layered. An example of a double-layered base layer 2 is an embodiment wherein a first layer of the base layer is formed from polyethylene PE and a second layer thereof is formed from polyamide PA.

One surface of the base layer 2, a lower side of the base layer 2 as viewed in Figure 1, is provided with a friction coating 3. The friction coating 3 is provided over a part of the lower side of the base layer 2. The friction coating may be formed for instance from adhesive glue or another frictional or adhesion inducing surface. The adhesive glue may be provided on the surface of the base layer 2 by employing methods known per se, for instance by techniques called tampo, seri, offset, flexo, rotation, etc. printing or jetting, for instance ink-jetting, or in another appropriate manner.

The friction coating 3 may be provided in the cloth 1 asymmetrically, i.e. in one edge thereof, as disclosed in Figure 1, for example. Consequently, the cloth is easy to handle when it is placed for instance on top of work clothes to protect the work clothes. A further advantage of such an asymmetrically provided friction coating is that for instance in a typical apron use the cloth sticks to the waist but does not cling to the knees, thus causing no risk of tripping over.

The base layer 2 may be 0.01 to 0.1 mm in thickness, for instance. When manufactured from low-density polyethylene, for instance, such a cloth is translucent and almost transparent. In such a support layer, a friction surface formed from adhesive glue, for instance, is clearly discernible.

The friction coating 3 is formed from patterns 4 running in a given direction. Such patterns include letters or numbers, for instance. Further, such a pattern could be for example the male sign, no stopping sign or another corresponding pattern running in a certain logical and commonly accepted or known direction. Such a pattern helps a user to discover which way up to place the cloth 1. Further, such an adhesive pattern is advantageous because the adhesive glue in itself forms a pattern indicating which way up the film is and how it should be placed, without any separate, extra printing action, i.e. the adhesive also serves as "printing ink".

When the cloth 1 is provided with the friction coating 3 only on one side of the cloth 1, and the base layer 2 is made from a slippery material, the cloth 1 can be used for instance as a transfer cloth, as illustrated in Figure 2. The friction coefficient of the friction coating 3 against for instance a garment is at least 0.6 or, when the friction coating 3 is for instance adhesive glue, even considerably higher. In the embodiment of Figure 2, the cloth 1 is arranged underneath a patient 6 lying in a bed 5. The cloth 1 thus resides between the patient 6 and his or her underlying surface. Thus, when one surface of the cloth 1 is slippery while the other surface thereof is highly frictional, the cloth 1 enables friction to be reduced between the patient 6 and his or her underlying surface while at the same time the cloth stays straight and immobile with respect to the desired target. This enables the patient 6 to be moved for instance horizontally in the bed 5 by applying reasonably little force.

In the embodiment of Figure 2, the friction coating 3 lies against the patient 6, in which case when the patient 6 is moved, the cloth 1 moves along with the patient. The cloth 1 could also be placed such that the friction coating 3 faces downwards and the slippery surface of the cloth 1 lies against the patient 6. In such a case, however, the cloth 1 would stay put while the patient is being moved. When the cloth 1 moves as illustrated in Figure 2 along with the patient 6, it is also possible to grab the cloth 1 and use the cloth 1 for pulling the patient 6 in a desired direction.

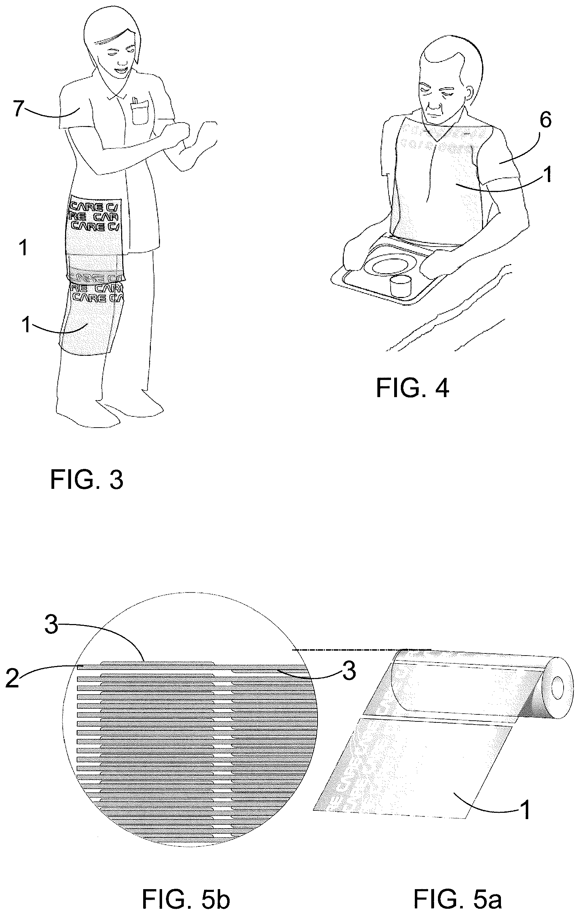

In the embodiment of Figure 3, the adhesive glue forming the friction coating 3 is used for attaching sheets of the cloth 1 to the garments of a nurse 7. This enables the cloth 1 to be used for protecting the nursing person and thus for reducing the risk of contamination. The cloth 1 also substantially reduces the need to wash the work clothes. The cloth 1 is disposable, which efficiently prevents bacteria from migrating from one room to another, carried by the work clothes.

In the embodiment of Figure 4, the adhesive glue forming the friction surface 3 is used for attaching a sheet of the cloth 1 to the garments of a patient 6. This enables the cloth 1 to be used for protecting the patient's garments from being soiled.

Figures 5a and 5b show an embodiment wherein the base layer 2 of the cloth 1 is provided with a friction coating 3 on both sides thereof. The base layer 2 is smooth and slippery, as shown above in connection with Figure 1. The friction coatings 3 are provided in a line direction, alternately on a top surface and a lower surface of the base layer 2. In other words, when the first side of the base layer 2 is provided with a friction coating 3, no friction coating 3 is provided at the corresponding point on the second side of the base layer, and vice versa. In such a case, when rolled up, the friction coatings 3 formed from adhesive glue never lie against one another, either. Consequently, the different layers of the roll do not stick together. The slippery and smooth base layer 2 necessitates no separate release paper to ensure detachment from the friction coating 3 of the next layer. This enables the manufacturing process to be kept simple, and no extra materials are necessary.

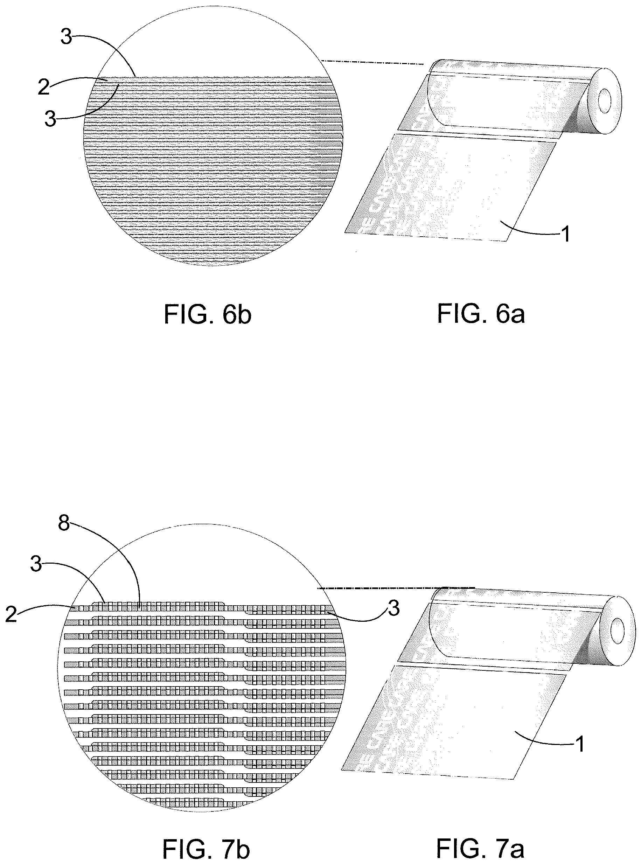

In the embodiment of Figures 6a and 6b, the base layer 2 of the cloth 1 is formed by a nonwoven fabric. The material of the nonwoven fabric may be cellulose, for instance. The material may be for instance flax, hemp, wood pulp, or a cellulose-derivative-based material, for instance viscose. The friction coating 3 is formed by a polymer fibre binding the nonwoven fabric together. This polymer fibre is for instance frictional rubbery polymer, such as elastane, thermoplastic elastomer TPE, or ethylene-vinyl acetate EVA. The cloth in its entirety is permeable to air, i.e. it is breathable. This enables it to be used for supporting a patient even over a long period of time.

The embodiment of Figures 7a and 7b mainly corresponds to the embodiment of Figures 5a and 5b, but the base layer 2 comprises openings 8. The support layer 2 may be perforated, for instance. Consequently, the cloth 1 according to this embodiment is also permeable to air, i.e. it is perforated so as to make it breathable. Consequently, the cloth according to this embodiment can also be used for supporting the patient over a long period of time as well.

The size of the openings 8 may be adapted to enable the base layer 2 to be permeable to air but not water. The diameter of the openings 8 may thus be for instance less than 3 mm, or less than 2 mm, or less than 1 mm.

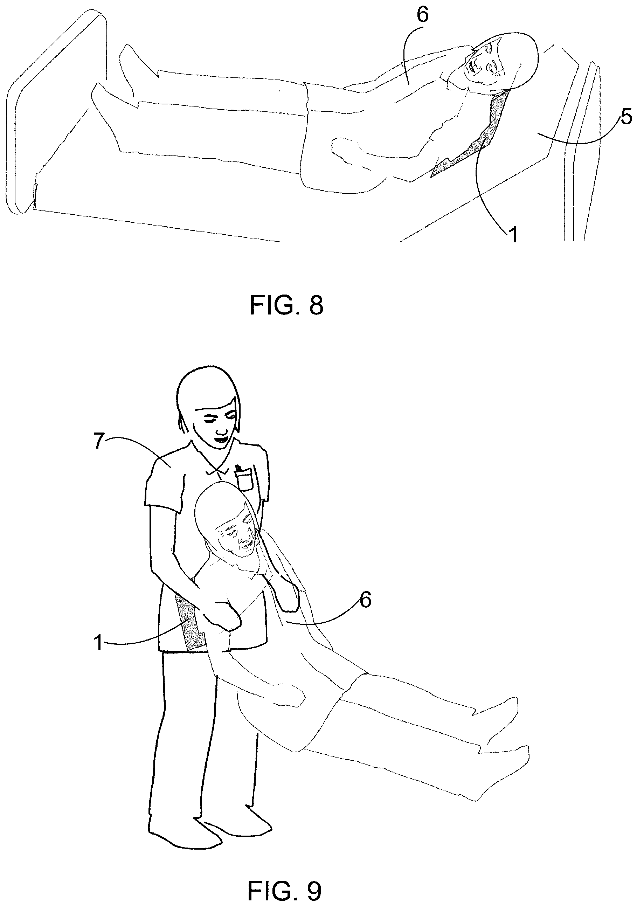

Figure 8 shows how the cloth 1, whose both sides are provided with a friction coating or whose both surfaces have a friction coefficient against a countersurface made in some other way to be higher than 0.6, is used for supporting the patient 6 into a desired position. An end of the bed 5 has been lifted, in which case the patient 6 tends to slip downwards. The cloth 1 substantially increases friction between the patient 6 and the bed 5 and thus prevents the patient 6 from sliding downwards. The countersurface for the patient is then provided by the bed-sheet in the bed 5.

Figure 9 shows how the cloth 1, whose both sides are provided with a friction coating 3 or whose both surfaces have a friction coefficient against a countersurface made in some other way to be higher than 0.6, is used for increasing friction between the patient 6 and the nurse 7. The countersurface for the patient is then provided by the garments of the nurse 7. This makes it possible to avoid the patient 6, while being lifted or moved, being slipped from the nurse's 7 grip. On the other hand, the friction-increasing cloth also distributes the strains caused by the lifting and moving over the nurse's 7 entire body in a more advantageous manner.

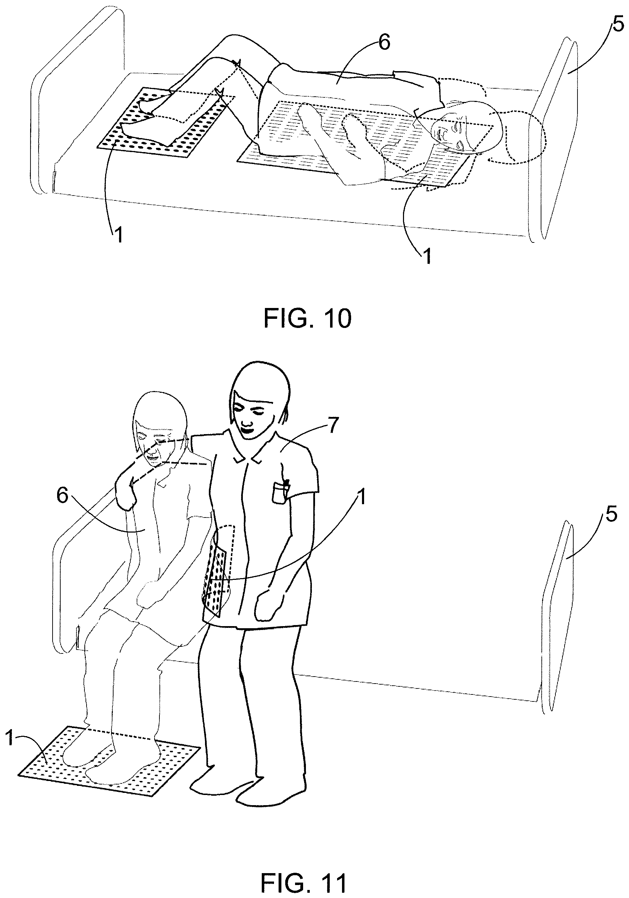

Figure 10 shows how the cloth, whose both surfaces have a friction coefficient against a countersurface made to be higher than 0.6, is used in a bed in connection with a horizontal transfer, underneath the soles of the patient's 6 feet to prevent the feet from sliding against the bed-sheet when the patient pushes him- or herself using his or her feet. The countersurface for the patient 6 is then provided by the bed-sheet in the bed 5. The cloth 1 whose both sides are frictional is thus placed underneath the soles of the patient's 6 feet. This enables the patient 6 to efficiently utilize his or her own foot power while moving on the bed 5 horizontally or while being moved horizontally on the bed 5. The cloth 1 to be placed underneath the patient's body may be a cloth with at least one slippery surface, according to Figure 2.

Figure 11 shows how the cloth 1, whose both surfaces have a friction coefficient against a countersurface higher than 0.6, is used when the patient is getting out of the bed or while helping the patient to get out of the bed. The cloth 1 whose both sides are frictional is thus placed underneath the soles of the patient's 6 feet, against the floor. The countersurface for the patient is then provided by the floor. This cloth prevents the patient's 6 feet from slipping while he or she is getting out of the bed. It is also possible to use a cloth 1 which is frictional on both sides between the nurse 7 assisting the patient 6 and the patient 6. In such a case, the countersurface for the patient is provided by the garments of the nurse 7. The cloth 1 between the patient 6 and the nurse 7 improves the friction between the patient 6 and the nurse 7, thus enabling the nurse 7 to help the patient 6 efficiently and safely with less force.

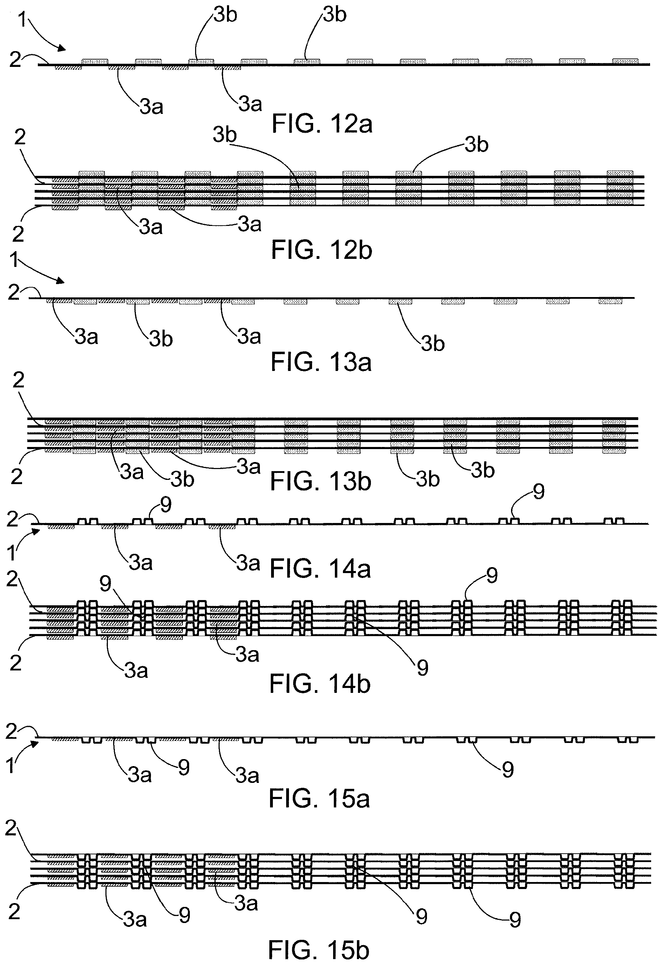

Figure 12a shows an embodiment wherein the base layer 2 of the cloth 1 is provided with a friction coating on both sides thereof. As seen in Figure 12a, a friction coating provided on a lower side is adhesive glue 3a. A surface opposite the adhesive glue 3a, i.e. a top surface as seen in Figure 12a, is as a friction coating 3b preferably provided with a friction coating other than adhesive glue. Such a friction coating 3b may be silicone, for example. Further, the friction coating 3b may be for instance frictional expansive ink, elastic hot-melt glue or another friction enhancing polymer.

Figure 12a thus shows a structure formed by the friction coating 3b and arranged somewhere else than where the adhesive glue 3a is provided. This structure 3b helps in keeping the entity formed by the cloths 1 placed on top of one another uniform in thickness. This is illustrated in Figure 12b. Figure 12b illustrates for instance a stack formed by sheets placed on top of one another, or an entity formed by layers lying on top of one another in a roll of a rolled up cloth. Without the friction coatings 3b, the stack formed by the sheets lying on top of one another would end up slanting, or the rolled-up cloth would produce a conical roll, which would result in asymmetric draw in the cloth and make the line more difficult to stay on its path. However, the structure formed by the friction coating 3b enables the entity formed by the cloths 1 lying on top of one another to be made uniform in thickness.

The height of the friction coating 3b preferably equals or exceeds the height of the adhesive glue 3a. The structure formed by the friction coatings 3b thus enables the cloths 1 lying on top of one another to be prevented from sticking and adhering together. Particularly while rolling up a roll, it is clearly advantageous that the different layers of the roll do not stick together. In particular, if the height of the structure formed by the friction coating 3b is greater than the height of the adhesive glue 3a, it is possible to efficiently prevent the cloth layers from sticking together. Silicone is a particularly advantageous material for the friction coating 3b since it sticks poorly to adhesive glue.

Figure 13a shows a structure otherwise corresponding to that of Figure 12a but the adhesive glue 3a and the friction coating 3b are provided on the same side of the cloth. In such a case, one surface of the cloth may be smooth and slippery. On the other hand, when desired, the base layer 2 may also be made of a material whose friction coefficient against a countersurface is higher than 0.6. Although in the embodiment of Figure 13a the adhesive glue 3a and the friction coating 3b are provided on the same side and the height of the friction coating 3b is greater than the height of the adhesive glue 3a, it is possible to attach the cloth to a countersurface by means of the adhesive glue since the base layer of the cloth is flexible and yielding in structure and thickness and, on the other hand, the countersurface is typically uneven. Such an uneven surface is provided for instance by the nurse's garments.

Figure 14a shows an embodiment wherein a part of one surface of the cloth 1 is provided with adhesive glue 3a. Further, the cloth is shaped such that the cloth is provided with protrusions 9. These protrusions 9 are formed somewhere else than where the adhesive glue 3a is provided. The protrusions 9 function as the friction coatings 3b illustrated in Figures 12a and 12b. Consequently, they thus keep the entity formed by cloths or layers of cloth arranged on top of one another uniform in thickness. Further, the protrusions 9 preferably equal or exceed the adhesive glue 3a in height, in which case they also serve in a manner corresponding to that of the friction coatings 3b illustrated in Figures 12a and 12b to prevent the layers of the cloth 1 lying on top of one another or cloths arranged on top of one another from sticking together.

The protrusions 9 are thus produced by providing the cloth 1 with a desired shape. This desired shape may run in a longitudinal direction or in a transverse direction of the cloth, or in both the longitudinal and the transverse directions. Such a shape may be achieved for instance by employing embossing, for instance.

The protrusions 9 increase friction between the cloth 1 and a countersurface. Thus, the cloth according to Figure 14a may also be made such that on both sides of the cloth, the surface has a friction coefficient against a countersurface that is, over at least a part of the surface, higher than 0.6.

The embodiment according to Figures 15a and 15b otherwise corresponds to the embodiment according to Figures 14a and 14b but the protrusions 9 are formed on the same side as where the adhesive glue 3a is provided. In the embodiments of Figures 14a, 14b, 15a and 15b, recesses are formed on sides opposite the protrusions. Also these recesses increase the friction between the surface of the cloth and the countersurface. Consequently, by forming such protrusions and at the same time recesses on the opposite sides, it is thus possible to increase the friction coefficient of both sides of the cloth.

According to an embodiment, the electrical conductivity of the cloth 1 is improved. By improving the electrical conductivity, problems caused by discharges of frictional electricity are avoided or at least alleviated. Such discharges of frictional electricity may occur for instance while the patient moves or is being transferred, and they may for instance disturb accurate electronic measuring devices. The electrical conductivity of the cloth 1 may be improved by improving the electrical conductivity of either the base layer 2 or the friction coating 3, or both. The electrical conductivity may be improved for instance by admixing the raw material with metallization or some electrically conducting speciality polymer, or by using an electrically conducting printing ink as the friction coating.

It will be apparent to a person skilled in the art that as technology advances, the basic idea of the invention may be implemented in many different ways. The invention and its embodiments are thus not restricted to the examples described above but may vary within the scope of the claims.

## Claims

1. A disposable cloth suitable for use in association with a patient and comprising a base layer (2), and that at least a part of both sides of the base layer (2) are provided with a friction coating (3) so as to enable the cloth to be used for increasing friction between the patient and the countersurface, wherein both sides of the base layer (2) are provided with the friction coating (3) such that when a first side of the base layer (2) is provided with a friction coating, no friction coating is provided at the corresponding point on a second side of the base layer (2), and vice versa.

2. A cloth as claimed in claim 1, **characterized in that** the friction coating (3) is at least partly adhesive glue.

3. A cloth as claimed in claim 1 or 2, **characterized in that** the cloth (1) is rolled up into a roll and the friction coating (3) is provided in a line direction, alternately on a top surface and a lower surface of the base layer (2).

4. A cloth as claimed in any one of the preceding claims, **characterized in that** the cloth (1) is made to be permeable to air.

5. A cloth as claimed in any one of the preceding claims, **characterized in that** a part of at least one surface of the cloth is provided with adhesive glue, and somewhere else than where the adhesive glue is provided is arranged a shape or structure to keep the entity formed by the cloths lying on top of one another uniform in thickness.

6. A cloth as claimed in claim 5, **characterized in that** the height of the shape or structure equals or exceeds the height of the adhesive glue.

7. A cloth as claimed in any one of the preceding claims, **characterized in that** the cloth is provided with a material improving its electrical conductivity.

## Patentansprüche

1. Einwegtuch, das zur Verwendung in Verbindung mit einem Patienten geeignet ist und eine Basisschicht (2) umfasst, und dass mindestens ein Teil von beiden Seiten der Basisschicht (2) mit einer Reibbeschichtung (3) versehen ist, damit das Tuch zum Erhöhen der Reibung zwischen dem Patienten und der Gegenfläche verwendet werden kann, wobei beide Seiten der Basisschicht (2) mit der Reibbeschichtung (3) versehen sind, derart, dass, wenn eine erste Seite der Basisschicht (2) mit einer Reibbeschichtung versehen ist, ein entsprechender Punkt auf einer zweiten Seite der Basisschicht (2) nicht mit einer Reibbeschichtung versehen ist, und umgekehrt.

2. Tuch nach Anspruch 1, **dadurch gekennzeichnet, dass** die Reibbeschichtung (3) mindestens teilweise Haftklebstoff ist.

3. Tuch nach Anspruch 1 oder 2, **dadurch gekennzeichnet, dass** das Tuch (1) zu einer Rolle aufgerollt ist und die Reibbeschichtung (3) in einer Linienrichtung abwechselnd auf einer oberen Fläche und einer unteren Fläche der Basisschicht (2) bereitgestellt ist.

4. Tuch nach einem der vorhergehenden Ansprüche, **dadurch gekennzeichnet, dass** das Tuch (1) luftdurchlässig hergestellt ist.

5. Tuch nach einem der vorhergehenden Ansprüche, **dadurch gekennzeichnet, dass** ein Teil mindestens einer Fläche des Tuchs mit Haftklebstoff versehen ist und an einer anderen Stelle, als an der, an der der Haftklebstoff bereitgestellt ist, eine Form oder eine Struktur angeordnet ist, um die Dicke der Entität, die durch die Tücher, die aufeinander liegen, gebildet wird, einheitlich zu halten.

6. Tuch nach Anspruch 5, **dadurch gekennzeichnet, dass** die Höhe der Form oder der Struktur mit der Höhe des Haftklebstoffs gleich ist oder diese überschreitet.

7. Tuch nach einem der vorhergehenden Ansprüche, **dadurch gekennzeichnet, dass** das Tuch mit einem Material versehen ist, das dessen elektrische Leitfähigkeit verbessert.

## Revendications

1. Tissu jetable approprié pour être utilisé en association avec un patient et comprenant une couche de base (2), et en ce qu'au moins une partie des deux côtés de la couche de base (2) est prévue avec un revêtement de friction (3) afin de permettre d'utiliser le tissu pour augmenter la friction entre le patient et la surface antagoniste, dans lequel les deux côtés de la couche de base (2) sont prévus avec le revêtement de friction (3) de sorte que lorsqu'un premier côté de la couche de base (2) est prévu avec un revêtement de friction, aucun revêtement n'est prévu au niveau du point correspondant sur un second côté de la couche de base (2), et vice versa.

2. Tissu selon la revendication 1, **caractérisé en ce que** le revêtement de friction (3) est au moins partiellement une colle adhésive.

3. Tissu selon la revendication 1 ou 2, **caractérisé en ce que** le tissu (1) est enroulé en rouleau et le revêtement de friction (3) est prévu dans une direction linéaire, en variante sur une surface supérieure et une surface inférieure de la couche de base (2).

4. Tissu selon l'une quelconque des revendications précédentes, **caractérisé en ce que** le tissu (1) est réalisé pour être perméable à l'air.

5. Tissu selon l'une quelconque des revendications précédentes, **caractérisé en ce qu'**une partie d'au moins une surface du tissu est prévue avec une colle adhésive, et quelque part ailleurs que l'endroit où la colle adhésive est prévue, on agence une forme ou structure pour maintenir l'entité formée par les tissus les uns au-dessus des autres, uniforme en épaisseur.

6. Tissu selon la revendication 5, **caractérisé en ce que** la hauteur de la forme ou de la structure égale ou dépasse la hauteur de la colle adhésive.

7. Tissu selon l'une quelconque des revendications précédentes, **caractérisé en ce que** le tissu est prévu avec un matériau améliorant sa conductivité électrique.
